(19) Europäisches Patentamt
European Patent Office
Office européen des brevets

(11) Veröffentlichungsnummer: **0 123 140**
**B1**

(12) # EUROPÄISCHE PATENTSCHRIFT

(45) Veröffentlichungstag der Patentschrift: **23.07.86**

(21) Anmeldenummer: **84103146.1**

(22) Anmeldetag: **22.03.84**

(51) Int. Cl.⁴: **C 08 G 18/81**, C 25 D 13/06, C 09 D 3/72, C 09 D 3/49, C 08 G 18/67, C 08 G 18/64

(54) **Bindemittel für die kathodische Elektrotauchlackierung.**

(30) Priorität: **30.03.83 DE 3311512**

(43) Veröffentlichungstag der Anmeldung: **31.10.84 Patentblatt 84/44**

(45) Bekanntmachung des Hinweises auf die Patenterteilung: **23.07.86 Patentblatt 86/30**

(84) Benannte Vertragsstaaten: **AT BE CH DE FR GB IT LI NL SE**

(56) Entgegenhaltungen: **GB-A-1 261 313**

(73) Patentinhaber: **BASF Lacke + Farben Aktiengesellschaft, Max- Winkelmann- Strasse 80, D-4400 Münster (DE)**

(72) Erfinder: **Schupp, Eberhard, Dr., Tilsiter Weg 4, D-6830 Schwetzingen (DE)**
Erfinder: **Loch, Werner, Dr., In der Bleiche 2, D-6701 Erpolzheim (DE)**
Erfinder: **Osterloh, Rolf, Dr., Am Wehrhaus 16 a, D-6718 Gruenstadt (DE)**
Erfinder: **Ahlers, Klaas, Dr., Foehrenweg 21, D-4400 Muenster (DE)**

(74) Vertreter: **Welzel, Dr. Gunther, c/o BASF Aktiengesellschaft Carl- Bosch- Strasse 38, D-6700 Ludwigshafen (DE)**

EP 0 123 140 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft Bindemittel für kathodische Elektrotauchlacke auf Basis eines Gemisches aus einem stickstoffbasische Gruppen enthaltenden Polyadditionsprodukt und einem verkappten Polyisocyanat.

Stickstoffbasische Gruppen tragende Polyadditionsprodukte, welche Gruppierungen der allgemeinen Formel (I) und/oder (II)

$$-CH_2-NH-\overset{O}{\overset{\|}{C}}-CR^1=CHR^2 \qquad (I)$$

$$-CH_2-NH-\overset{O}{\overset{\|}{C}}-CHR^1-CHR^2-NR^3R^4 \qquad (II)$$

enthalten, wobei $R^1$ und $R^2$ untereinander gleich oder verschieden sind und für Wasserstoff oder eine Methylgruppe stehen und $R^3$ und $R^4$ untereinander gleich oder verschieden sind und für eine Alkylgruppe oder eine Hydroxyalkylgruppe stehen oder miteinander einen 5- oder 6-gliedrigen Ring bilden, lassen sich z.B. nach DE—OS—29 42 488 und DE—OS—30 21 300 herstellen. Diese Produkte lassen sich als Bindemittel für die kathodische Elektrotauchlackierung verwenden und zeigen eine Reihe von sehr guten Eigenschaften, wie große Stabilität der damit hergestellten Lackbäder, hohen Korrosionsschutz, guten Umgriff und niedrige Einbrennverluste.

Die Aushärtung erfolgt dabei zweckmäßigerweise bei Temperaturen von etwa 180°C, durch Zusatz von Härtungskatalysatoren, wie Mangan- oder Cobalt-salze, lassen sich auch bei 170°C Einbrenntemperatur vernetzte, harte und elastische Filme erreichen. Eine weitere Senkung der Einbrenntemperatur und damit verbunden eine weitere Energieeinsparung war jedoch wünschenswert. Außerdem sollte eine weitere Elastifizierung der Lackfilme angestrebt werden.

Die Lösung dieser Aufgabe wurde erreicht durch die Verwendung von Bindemitteln, welche zusätzlich ein Umsetzungsprodukt aus einem Polyisocyanat und einem ungesättigten Amin enthalten.

Gegenstand der vorliegenden Erfindung ist ein für die Herstellung kathodischer Elektrotauchlacke geeignetes durch Säurezusatz wasserverdünnbares Bindemittel, das dadurch gekennzeichnet ist, daß es besteht aus einem Gemisch aus

(A) 60 bis 95 Gew.% eines stickstoffbasische Gruppen tragenden Polyadditionsproduktes, welches Gruppierungen der allgemeinen Formel (I) und/oder (II)

$$-CH_2-NH-\overset{O}{\overset{\|}{C}}-CR^1=CHR^2 \qquad (I)$$

$$-CH_2-NH-\overset{O}{\overset{\|}{C}}-CHR^1-CHR^2-NR^3R^4 \qquad (II)$$

enthält, wobei $R^1$ und $R^2$ untereinander gleich oder verschieden sind und für Wasserstoff oder eine Methylgruppe stehen und $R^3$ und $R^4$ untereinander gleich oder verschieden sind und für eine Alkylgruppe mit 1 bis 9 Kohlenstoffatomen oder eine Hydroxyalkylgruppe mit 2 bis 10 Kohlenstoffatomen stehen oder miteinander einen 5- oder 6-gliedrigen Ring bilden und

(B) 5 bis 40 Gew.% eines Umsetzungsproduktes aus einem Polyisocyanat und einem olefinisch ungesättigten Amin, welches eine sekundäre Aminogruppe und eine Methacrylamidgruppe oder Methacrylestergruppe trägt.

Gegenstand der vorliegenden Erfindung ist außerdem die Verwendung dieser Bindemittel in protonierter Form für die kathodische Elektrotauchlackierung.

Zu den Aufbaukomponenten des Bindemittels ist in einzelnen folgendes zu sagen.

Als stickstoffbasische Gruppen tragendes Polyadditionsprodukt (A) können Produkte gemäß der DE—OS—29 34 467 eingesetzt werden. Diese können z.B. hergestellt werden, indem zunächst ein polymeres Polylol mit N - Alkoxymethyl - (meth) - acrylamid umgesetzt wird und an das resultierende ungesättigte Polymere ein primäres oder sekundäres Amin addiert wird. Da in diesen Produkten die α,β-ungesättigten Amidgruppen über Methyletherbrücken ans Polymermolekül gebunden sind, ist die Hydrolysestabilität dieser Materialien wenig ausgeprägt.

Bevorzugt werden als Komponente (A) Produkte gemäß der DE—OS—29 42 488 eingesetzt. Dabei handelt es sich um stickstoffbasische Gruppen tragende Polyadditionsprodukte mit einem mittleren Molekulargewicht zwischen 500 und 10 000, welche an aromatische Ringe gebundene Gruppierungen der Formel (I) enthalten. Derartige Polyadditionsprodukte können z.B., wie in der DE—OS—29 42 488

beschrieben, aus Mono- und/oder Polyphenolen, die Gruppierungen der Formel (I) tragen, Polyepoxiden und Aminen oder Aminsalzen hergestellt werden.

Weitere, als Komponente (A) bevorzugte Produkte lassen sich gemäß der DE—OS—30 21 300 herstellen. Diese werden erhalten, wenn man an

(a) Mono- und/oder Polyphenole, welche Gruppierungen der allgemeinen Formel (I)

$$-CH_2-NH-\overset{\overset{\displaystyle O}{\|}}{C}-CR^1=CHR^2$$

tragen, wobei $R^1$ und $R^2$ untereinander gleich oder verschieden sind und für Wasserstoff oder ein Methylgruppe stehen,

(b) Amine mit mindestens einer primären und/oder sekundären Aminogruppe addiert und mit

(c) Epoxidverbindungen mit 1 bis 4 Epoxidgruppen pro Molekül und einem Molekulargewicht von maximal 2 500 umsetzt, wobei die Komponenten (a) und (c) in solchen Mengen eingesetzt werden, daß das Verhältnis der phenolischen Hydroxylgruppen von (a) zu Epoxidgruppen von (c) 1:0,5 bis 1:2 beträgt und das Amin (b) in einer solchen Menge eingesetzt wird, daß das resultierende Polyadditionsprodukt aus (a), (b) und (c) 0,1 bis 5 Gew.% basischen Stickstoff enthält.

Komponente (A) ist im erfindungsgemäßen Bindemittelgemisch in einer Menge von 60 bis 95, vorzugsweise 65 bis 85 Gew.% enthalten.

Als Komponente (B) werden erfindungsgemäß Umsetzungsprodukte aus einem Polyisocyanat und einem olefinisch ungesättigten Amin, welches eine sekundäre Aminogruppe und eine Methacrylamidgruppe oder eine Methacrylestergruppe trägt, verwendet. Umsetzungsprodukte aus Di- und/oder Triisocyanaten mit Hydroxyethyl - (meth) - acrylat- oder Hydroxypropyl - (meth) - acrylat sind aus der DE—OS—27 52 255 bekannt. Als Vernetzer sind diese Produkte jedoch wenig aktiv, so daß Einbrenntemperaturen von etwa 180°C angewandt werden.

Durch Einsatz der erfindungsgemäßen Komponente (B) lassen sich jedoch ohne weiteres bei 160°C völlig durchgehärtete Lackfilme erzeugen, bei Einsatz von Härtungskatalysatoren wie Mangan- oder Kobaltsalzen sogar schon bei 140°C.

Zur Herstellung der Komponente (B) können beliebige aliphatische, alicyclische und/oder aromatische Polyisocyanate eingesetzt werden. Beispiele geeigneter Polyisocyanate sind Diisocyanate wie Hexamethylendiisocyanat, Isophorondiisocyanat, Cyclohexan - 1,4 - diisocyanat, Toluylendiisocyanat, 4,4' - Diphenylmethandiisocyanat. Triisocyanat wie biuretisiertes oder isocyanuratisiertes Hexamethylendiisocyanat und das Additionsprodukt von 3 Mol Toluylendiisocyanat an 1 Mol Trimethylolpropan. Auch Isocyanat-Präpolymere, z.B. Additionsprodukte von Diisocyanaten an Polyester- oder Polyetherpolyole, können als Polyisocyanate eingesetzt werden. Als olefinisch ungesättigtes Amin, welches eine sekundäre Aminogruppe und eine Methacrylamid- oder Methacrylestergruppe trägt, kommen vor allem Amine mit folgender allgemeinen Formel (III) in Betracht:

$$\overset{R^4}{NH}-R^5-X-\overset{\overset{\displaystyle O}{\|}}{C}-\overset{\overset{\displaystyle CH_3}{|}}{C}=CH_2 \qquad (III)$$

worin $R^4$ einen 3 bis 10 Kohlenstoffatome enthaltenden Kohlenwasserstoffrest, der an dem der NH-Gruppe benachbarten Kohlenstoffatom mindestens eine Verzweigung enthält, $R^5$ eine Ethylen- oder Propylenkette und X ein Sauerstoffatom oder eine NH-Brücke bedeutet, $R^4$ kann beispielsweise ein Isopropyl-, tert.-Butyl-, iso-Amyl-, Ethylhexylrest sein; bevorzugt ist $R^4$ ein Isopropyl- oder tert.-Butylrest.

Ein Beispiel eines besonders geeigneten olefinisch ungesättigten Amins ist Isopropylaminopropylmethacrylamid.

Zur Herstellung der Komponente (B) kann entweder das Amin zum vorgelegten Polyisocyanat oder das Polyisocyanat zum vorgelegten Amin gegeben werden. Die Reaktion läuft bereits bei Raumtemperatur ab, doch kann zur Beschleunigung der Reaktion bis auf ca. 150°C, bevorzugt bis auf etwa 100°C erwärmt werden. Sind die Einsatzstoffe und das Reaktionsprodukt bei der Reaktionstemperatur flüssig, so kann ohne Lösemittel gearbeitet werden, im allgemeinen wird man die Reaktion jedoch in einem inerten Lösemittel wie einem Ether, Ester, Keton oder Kohlenwasserstoff durchführen.

Komponente (B) ist im erfindungsgemäßen Bindemittelgemisch in einer Menge von 5 bis 40, vorzugsweise 15 bis 35 Gew.-% enthalten.

Die Komponenten (A) und (B) werden in organischen Lösemitteln gelöst und, gegebenenfalls bei erhöhter Temperatur, sorgfältig gemischt. Anschließend wird, eventuell nach dem Vermahlen der Harzmischung mit Pigmenten und Hilfsstoffen, zur teilweisen oder vollständigen Neutralisation eine Säure, z.B. eine Carbonsäure, wie Ameisensäure, Essigsäure oder Milchsäure, eingerührt und der Ansatz auf de Verarbeitungskonzentration mit Wasser verdünnt. Es kann jedoch auch das nicht neutralisierte Material in mit Säure versetztes Wasser eingerührt werden.

Die erfindungsgemäßen Bindemittel werden vorzugsweise als Lackbindemittel für die kathodische Elektrotauchlackierung elektrisch leitender Flächen, z.B. von Metallteilen, Blechen usw. aus Messing,

Kupfer, Aluminium, metallisierte Kunststoffe oder mit leitenden Kohlenstoff überzogene Materialien, sowie Eisen und Stahl, die gegebenenfalls chemisch vorbehandelt, z.B. phosphatiert, sind, verwendet.

Für die kathodische Elektrotauchlackierung wird im allgemeinen ein Feststoffgehalt von 5 bis 30 Gew.% eingestellt. Die Abscheidung erfolgt üblicherweise bei Temperaturen von 15 bis 40°C während einer Zeit von 1 bis 5 Minuten und bei pH-Werten von 4,0 bis 8,5, vorzugsweise pH 5,5 bis 8,0, und Abscheidespannungen von 50 bis 500 Volt. Der zu beschichtende elektrisch leitende Körper wird dabei als Kathode geschaltet. Der abgeschieden Film kann bei Temperaturen oberhalb von 140°C ca. 20 Minuten gehärtet werden. Bei Lacken ohne Zusätzte von Härtungskatalysator sind Temperaturen von etwa 160°C bis 180°C zweckmäßig. Der Härtungskatalysator kann etnweder schon zum organisch gelösten Harz zugesetzt werden, der Zusatz kann jedoch auch zum wässrigen Bad erfolgen, wenn wasserlösliche Salze verwendet werden. Brauchbare Härtungskatalysatoren sind Schwermetallsalze, z.B. Salze des Mangans oder Kobalts, auch Bleisalze wirken, vor allem in Kombination mit einem der vorhergenannten Metallsalze, beschleunigend auf die Härtung und ermöglichen somit eine Erniedrigung der Einbrenntemperatur. Die Katalysatoren werden zweckmäßigerweise in Mengen von 5 bis 1 000 ppm Metall, bezogen auf wässriges Elektrotauchbad, eingesetzt.

Die folgenden Beispiele sollen die Erfindung näher erläutern, ohne sie zu beschränken. Die in den Beispielen genannten Teile und Prozente sind, sofern nicht anders angegeben. Gewichtsteile und Gewichtsprozente.

Beispiel 1

Komponente $A_1$

Zu 940 Teilen Phenol und 2 020 Teilen Methylolacrylamid werden 63 Teile Paraformaldehyd und 1 Teil Kupfer-Pulver gegeben. Der Ansatz wird durch Erwärmen auf 100°C gelöst, dann auf 55°C gekühlt und 10 Teile Bortrifluoriddiethyletherat zugesetzt. Nach 1 Stunde bei 55 bis 60°C wird nochmals die gleiche Katalysatormenge zugegeben und 3 Stunden bei 60°C gehalten. Anschließend wird auf 115°C erhitzt und 30 Minuten bei dieser Temperatur gehalten, wobei etwa 200 Teile Wasser abdestilliert werden. Dann wird auf 80°C abgekühlt und mit 1 200 Teilen Ethylenglykol verdünnt. Daraus wird ein Aminaddukt hergestellt, in dem man zu 1 311 Teilen dieser Lösung 500 Teile Diethanolamin und 2 Teile 2,6 - Di - tert. - butyl - p - kresol gibt und 2 Stunden auf 90°C erhitzt.

In einem getrennten Gefäß werden 580 Teile Dimerfettsäure mit weniger als 4% Trimeranteil und 210 Teile 2,2'-Aminoethoxyethanol innerhalb von 2 Stunden unter Abdestillieren des gebildeten Wassers auf 200°C erhitzt und 6 Stunden bei dieser Temperatur gehalten. Das resultierende Produkt, ein Diamiddiol, hat eine Restsäurezahl von 2,3 mg KOH/g. 740 Teile eines Diglycidylethers von Bisphenol A mit einem Epoxidäquivalentgewicht von 500 wird in 65 Teilen heißem Xylol gelöst, mit 279 Teilen des obigen Diamiddiols versetzt und auf 130°C erhitzt. Dann werden 1,5 Teile Dimethylbenzylamin zugesetzt. Das Gemisch wird bei 130°C gehalten, bis das Epoxidäquivalentgewicht des entstandenen kettenverlängerten Epoxidharzes auf 1 000 angestiegen ist. Es werden 431 Teile des obigen Aminaddukts und 15 Teile Methyldiethanolamin zugegeben, dann wird mit 211 Teilen Isobutanol und 211 Teilen Isopropanol auf 70% Festgehalt verdünnt und unter Rühren bei 70°C gehalten. Nach 15 bis 20 Stunden hat das Produkt die gewünschte Viskosität von 1 000 mPas, gemessen bei 75°C mit einem Platten - Konus - Viskosimeter, erreicht.

Komponente $B_1$

In einem geschlossenen, mit Stickstoff gespülten Gefäß werden 566 Teile Isopropylaminopropylmethacrylamid, 570 Teile Dioxan, 0,3 Teile Hydrochinonmonomethylether und 0,3 Teile Dibutylzinndilaurat auf 90°C erhitzt. Dann werden 573 Teile eines isocyanuratisierten Hexamethylendiisocyanats mit einem NCH-Gehalt von 22%, gelöst in 560 Teilen Dioxan, innerhalb von 2 Stunden zugetropft und noch weitere 2 Stunden bei 90°C gehalten. In dieser Zeit ist der Isocyanatgehalt auf 0 gesunken. Das Produkt hat einen Festgehalt von 50%.

Herstellung des Bindemittels

Zu 1 950 Teilen der Komponente $A_1$ werden 680 Teile der Komponente $B_1$ zugegeben und sorgfältig gemischt. Dann wird mit 33 Teilen Essigsäure versetzt.

Beispiel 2

Komponente $A_2$

Zu 188 Teilen Phenol, 213 Teilen Acrylamid und 99 Teilen Paraformaldehyd werden 0,1 Teile Kupfer-Pulver gegeben und der Ansatz langsam erwärmt. Bei 80°C hat sich die Masse weitgehend verflüssigt. Es wird auf 115°C erhitzt und 10 Minuten bei dieser Temperatur gehalten, wobei der Ansatz völlig klar wird. Nach Abkühlung auf 55 bis 60°C werden 2 Teile Bortrifluoriddiethyletherat zugegeben. Die Temperatur wird unter anfänglichem Kühlen bei 60°C gehalten. Nach 1 Stunde werden nochmals 2 Teile Bortrifluoriddiethyletherat zugegeben. Der Ansatz wird weitere 3 Stunden bei 60°C gehalten und danach mit 292 Teilen Isobutanol verdünnt. Die Temperatur wird bis zum Siedepunkt erhöht, und innerhalb von 90 Minuten werden ca. 50 Teile Wasser ausgekreist. Das so erhaltene Produkt weist einen Festgehalt von 70% auf.

Daraus wird ein Amminaddukt hergestellt, indem zu 120 Teilen der Lösung 43 Teile Diethanolamin und 0,2 Teile Hydrochinonmonomethylether gegeben werden und 2 Stunden auf 95°C erhitzt wird.

In einem getrennten Gefäß werden 564 Teile eines Epoxidharzes auf Basis von Bisphenol A mit einem Epoxidäquivalentgewicht von 190, 137 Teile Bisphenol A und 247,5 Teile eines Polycaprolactondiols mit einem mittleren Molekulargewicht von 550 und 260,5 Teile Xylol zum Rückfluß erhitzt und im Ansatz enthaltenes Wasser ausgekreist. Anschließend werden 200 Teile Xylol unter vermindertem Druck abgezogen. Es werden 1,25 Teile Dimethylbenzylamin bei 150°C zugegeben und 1 Stunde bei 160°C gehalten. Dann wird auf 130°C gekühlt, mit weiteren 1,9 Teilen Dimethylbenzylamin versetzt und so lange bei 130°C gehalten, bis der Epoxidwert auf 0,11 Epoxidgruppen/100 g gefallen ist, wozu 2 bis 4 Stunden erforderlich sind.

Zu 300 Teilen davon werden 109 Teile des obigen Aminaddukts und 2,15 Teile Dimethylethanolamin gegeben. Es wird mit 56,6 Teilen Isopropanol und 56,6 Teilen Isobutanol auf einen Festgehalt von 70% eingestellt und auf 70°C erwärmt. Nach 20 Stunden hat das Produkt eine Viskosität von 900 bis 1 100 mPas, gemessen bei 75°C. Seine Aminzahl beträgt 45,3 mg KOH/g Festharz.

Komponente $B_2$

In einem geschlossenen, mit Stickstoff gespülten Gefäß werden 86 Teile Isopropylaminopropylmethacrylamid, 83,3 Teile Dioxan, 0,05 Teile Hydrochinonmonomethylether und 0,1 Teile Dibutylzinndilaurat auf 70°C erwärmt. Dann werden 121 Teile eines Isocyanat-Präpolymeren aus 1 Mol Trimethylolpropan und 3 Mol Toluylendiisocyanat mit einem Isocyanatgehalt von 17,3, gelöst in 40 Teilen Ethylacetat und 83 Teilen Dioxan, innerhalb von 1 Stunde zugetropft. Nach einer weiteren Stunde ist der Isocyanatgehalt auf 0 abgesunken.

Herstellung des Bindemittels

Zu 520 Teilen der Komponente $A_2$ werden 183 Teile der Komponente $B_2$ gegeben und sorgfältig gemischt. Nach Zusatz von 8 Teilen Eisessig ist das Produkt wasserdispergierbar.

Beispiel 3

Komponente $A_3$

Zunächst wird ein Amidamin aus 290 Teilen Leinölfettsäure und 104 Teilen Aminoethylethanolamin hergestellt. Dazu werden die Komponenten innerhalb von 1 Stunde auf 200°C erhitzt.

Anschließend wird 3-1/2 Stunden bei 200°C gehalten. Es werden insgesamt 18 Teile Wasser abdestilliert. Das Produkt erstarrt nach dem Abkühlen zu einer wachsartigen Masse und weist einen Gehalt an basischem Stickstoff von 3,5% auf. Davon liegen 3,3% Stickstoff in Form von sekündarem Amin und 0,2% als primäres Amin vor.

In einem Rührkessel werden nacheinander 600 Teile Phenol, 485 Teile Bisphenol A, 1 000 Teile Acrylamid, 490 Teile Paraformaldehyd und 1 Teil 2,6 - Di - tert. - butyl - p - kresol eingefüllt und unter Rühren auf 120°C erhitzt, bis eine klare Lösung entstanden ist. Nach Abkühlung auf 50°C werden 10 Teile Bortrifluoriddimethyletherat zugegeben. Unter Kühlen wird die Temperatur bei 50°C gehalten, bis die Reaktion abgeklungen ist. Anschließend wird auf 100°C erhitzt und 30 Minuten bei dieser Temperatur gehalten, wobei das entstandene Reaktionswasser unter vermindertem Druck abdestilliert wird. Anschließend wird mit 1 000 Teilen Isobutanol verdünnt. Das Produkt hat einen Feststoffgehalt von 70%.

Zu 157,5 Teilen dieses Produkts werden 40 Teile des obigen Amidamins, 40 Teile Diethanolamin und 0,1 Teile 2,6 - Di - tert. - butyl - p - kresol gegeben und 1 Stunde auf 80°C erwärmt. Dann werden 120 Teile eines Epoxidharzes auf Basis von Bisphenol A und Epichlorhydrin mit einem Epoxidäquivalentgewicht von 190 (z.B. (R)Epikote 828) und 93 Teile Isopropanol zugegeben und 15 Stunden auf 85°C erhitzt.

Komponente $B_3$

In einem geschlossenen Gefäß werden 566 Teile Isopropylaminopropylmethacrylamid, 475 Teile Dioxan, 0,3 Teile Hydrochinonmonomethylether und 0,3 Teile Dibutylzinndilaurat auf 100°C erhitzt. Dann wird eine Mischung aus 576 Teilen eines biuretisierten Hexamethylendiisocyanats (z.B. (R)Desmodur N der Firma Baya AG) mit einem Isocyanatgehalt von 21,9%, 81 Teilen Xylol, 81 Teilen Ethylglykolacetat und 475 Teilen Dioxan innerhalb von 2 Stunden zugetropft und 1 Stunde bei dieser Temperatur gehalten. Der Isocyanatgehalt ist nach dieser Zeit auf 0 abgesunken.

Herstellung des Bindemittels

Zu 450 Teilen der Komponente $A_3$ werden 158 Teile der Komponente $B_3$ gegeben und sorgfältig gemischt. Nach Zugabe von 12 Teilen Essigsäure ist das Produkt wasserverdünnbar.

Beispiel 4

Herstellung des Bindemittels

Zu 520 Teilen der Komponente $A_2$ werden 183 Teile der Komponente $B_3$ gegeben und sorgfältig gemischt. Dann werden 8 Teile Eisessig zugegeben.

Vergleichbeispiel

Anstelle der Komponente (B) wird gemäß der Lehre der DE—OS—27 52 255 ein ungesättigtes Triurethan hergestellt. Es wird dazu wie bei der Herstellung der Komponente $B_3$ verfahren, wobei jedoch anstelle von 566 Teilen Isopropylaminopropylmethacrylamid 390 Teile Hydroxyethylmethacrylat eingesetzt wird. Gleichzeitig werden statt 475 Teile nur 299 Teile Dioxan vorgelegt.

Herstellung des Bindemittels

Zu 520 Teilen der Komponente $A_2$ werden 134 Teile des obigen Triurethans gegeben und sorgfältig gemischt. Dann werden 8 Teile Eisessig zugegeben.

Prüfung der Bindemittel

Es werden jeweils 308 Teile Bindemittellösung mit 692 Teilen vollentsalztem Wasser auf 20% Festkörper verdünnt, mit 40 Teilen Kaolin, 6 Teilen basischem Bleisilikatpigment und 4 Teilen Ruß versetzt und nach Zugabe von Mahlkörpern 24 Stunden in der Kugelmühle gemahlen. Dann werden die Mahlkörper abgetrennt. Durch Zugabe von 666 Teilen vollentsalztem Wasser wird ein Badfeststoffgehalt von 15% eingestellt. Die Bäder werden 48 Stunden bei 30°C gerührt. An kathodisch geschalteten, zinkphosphatierten Prüftafeln aus Stahl werden Lackfilme innerhalb von 2 Minuten bei der angegebenen Spannung abgeschieden und 20 Minuten bei 180°C, bei 160°C und bei 140°C eingebrannt. Anschließend wird die Beständigkeit gegen Aceton durch 50-maliges Hin- und Herreiben mit einem acetongetränkten Wattebausch und die Elastizität in Form der Schlagtiefung geprüft. Die folgende Tabelle zeigt die Ergebnisse:

Ergebnis der Bindemittelprüfung, 17 μm Schichtstärke

| Bindemittel | pH | Umgriff nach Ford bei 17 μ Außenschichtdicke | Acetonfestigkeit 180°C | Acetonfestigkeit 160°C | Acetonfestigkeit 140°C | Schlagtiefung Nm 180°C | Schlagtiefung Nm 160°C | Schlagtiefung Nm 140°C |
|---|---|---|---|---|---|---|---|---|
| Beispiel 1 | 6,7 | 17 cm (270 V) | 1 | 1 | 3 | 18,08 | 18,08 | 4,52 |
| | | | 1* | 1* | 1* | 18,08* | 18,08* | 13,56* |
| Beispiel 2 | 6,6 | 16 cm (260 V) | 1 | 1 | 2 | 18,08 | 18,08 | 4,52 |
| | | | 1* | 1* | 1* | 18,08* | 18,08* | 18,08* |
| Beispiel 3 | 6,2 | 18 cm (320 V) | 1 | 1 | 3 | 9,04 | 4,52 | 2,26 |
| | | | 1* | 1* | 2* | 18,08* | 18,08* | 6,78* |
| Beispiel 4 | 6,6 | 15,5 cm (250 V) | 1 | 1 | 2 | 18,08 | 18,08 | 4,52 |
| | | | 1* | 1* | 1* | 18,08* | 18,08* | 13,56* |
| Vergleichsbeispiel | 6,5 | 15 cm (250 V) | 1 | 5 | 6 | 4,52 | <2,26 | <2,26 |
| | | | 1* | 3* | 6 | 18,08* | 4,52 | <2,26 |

*Bäder enthalten 50 ppm Mangan als Manganacetat.
Acetonfestigkeit: 1=sehr gut, 6=ungenügend.
Die Schlagtiefung wurde mit einem mandrel impact tester der Fa. Gardner nach ASTM D 27 94 bestimmt.

**Patentansprüche**

1. Für die Herstellung kathodischer Elektroauchlacke gegeignetes, durch Säurezusatz wasserverdünnbares Bindemittel, dadurch gekennzeichnet, daß es besteht aus einem Gemisch aus

(A) 60 bis 95 Gew.% eines stickstoffbasische Gruppen tragenden Polyadditionsproduktes, welches Gruppierungen der allgemeinen Formel (I) und/oder (II)

$$-CH_2-NH-\overset{O}{\overset{\|}{C}}-CR^1=CHR^2 \qquad (I)$$

$$-CH_2-NH-\overset{O}{\overset{\|}{C}}-CHR^1-CHR^2-NR^3R^4 \qquad (II)$$

enthält, wobei $R^1$ und $R^2$ untereinander gleich oder verschieden sind und für Wasserstoff oder eine Methylgruppe stehen und $R^3$ und $R^4$ untereinander gleich oder verschieden sind und für eine Alkylgruppe mit 1 bis 9 Kohlenstoffatomen oder eine Hydroxyalkylgruppe mit 2 bis 10 Kohlenstoffatomen stehen oder miteinander einen 5- oder 6-gliedrigen Ring bilden und

(B) 5 bis 40 Gew.% eines Umsetzungsproduktes aus einem Polyisocyanat und einem olefinisch ungesättigten Amin, welches eine sekundäre Aminogruppe und eine Methacrylamidgruppe oder Methacrylestergruppe trägt.

2. Bindemittel nach Anspruch 1, dadurch gekennzeichnet, daß als Komponente (B) Umsetzungsprodukte aus Polyisocyanaten und Isopropylaminopropylmethacrylamid verwendet werden.

3. Bindemittel nach einem der vorhergehenden Ansprüche, dadurch gekennzeichnet, daß als Komponente (A) eine Polyadditionsprodukt eingesetzt wird, bei dem die Gruppierungen der Formeln (I) und/oder (II) an aromatische Ringe gebunden sind.

4. Verwendung der Bindemittel nach einem der Ansprüche 1 bis 3, in protonierter Form als Bindemittel für die kathodische Elektrotauchlackierung.

**Revendications**

1. Liant diluable à l'eau par addition d'acide, convenant pour la préparation de peinture par électro-immersion cathodique, caractérisé par le fait qu'il est constitué d'un mélange de

(A) 60 à 95% en poids d'un produit de polyaddition portant un groupe à azote basique, qui contient des groupements de formule générale (I) et/ou (II)

$$-CH_2-NH-\overset{O}{\overset{\|}{C}}-CR^1=CHR^2 \qquad (I)$$

$$-CH_2-NH-\overset{O}{\overset{\|}{C}}-CHR^1-CHR^2-NR^3R^4 \qquad (II)$$

$R^1$ et $R^2$ identiques ou différents l'un de l'autre représentant hydrogène ou un groupe méthyle, et $R^3$ et $R^4$ identiques ou différents l'un de l'autre représentant un groupe alkyle de 1 à 9 atomes de carbone ou un groupe hydroxyalkyle de 2 à 10 atomes de carbone ou formant entre eux un noyau de 5 à 6 chaînons, et

(B) 5 à 40% en poids d'un produit de réaction d'un polyisocyanate et d'une amine insaturée oléfiniquement, et qui porte un groupe amino secondaire et un groupe méthacrylamide ou un groupe méthacrylester.

2. Liant selon la revendication 1, caractérisé par le fait que, comme composants (B), on utilise des produits de réaction de polyisocyanates et d'isopropylaminopropylméthacrylamide.

3. Liant selon l'une des revendications précédentes, caractérisé par le fait que, comme composant (A), on utilise un produit de polyaddition dans lequel les groupements de formules (I) et/ou (II) sont liés à des noyaux aromatiques.

4. Utilisation du liant selon l'une des revendications 1 à 3, sous forme protonée, comme liant pour la peinture par électro-immersion cathodique.

**Claims**

1. A binder which is water-dilutable on addition of acid, is suitable for prearing cathodic electrocoat finishes and comprises a mixture of

(A) from 60 to 95% by weight of a polyadduct which carries basic nitrogen groups and contains groupings of the general formulae (I) or (II) or (I) and (II)

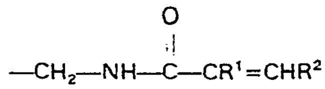 (I)

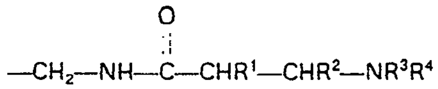 (II)

where $R^1$ and $R^2$ are identical or different and each is hydrogen or methyl, and $R^3$ and $R^4$ are identical or different and each is alkyl of 1 to 9 carbon atoms or hydroxyalkyl of 2 to 10 carbon atoms, or $R^3$ and $R^4$ together are a 5- or 6-membered ring, and

(B) from 5 to 40% by weight of a reaction product of a polyisocyanate and an olefinically unsaturated amine which carries a secondary amino group and a methacrylamide or methacrylate group.

2. A binder as claimed in claim 1, wherein a reaction product of a polyisocyanate and isopropylaminopropylmethacrylamide is used as component (B).

3. A binder as claimed in either of the preceding claims, wherein a polyadduct in which the groups of the formulae (I) or (II) or (I) and (II) are bonded to aromatic rings is used as component (A).

4. The use of a binder as claimed in any of claims 1 to 3 in protonated form as binder for cathodic electrocoating.